# EUROPEAN PATENT APPLICATION

(11) **EP 4 610 972 A1**
(43) Date of publication of application: **03.09.2025**
(21) Application number: 24160787.8
(22) Date of filing: 01.03.2024
(51) Int. Cl.: G09G 3/34

(54) **METHOD FOR DRIVING AND CONTROLLING A 3- OR 4-PIGMENT MEDIUM IN AN ELECTROPHORETIC DISPLAY SYSTEM**

(71) Applicant: E-Paper Innovation Ltd., London WC2H 9JQ (GB)
(72) Inventor: Haugwitz, Matti, 01129 Dresden (DE); Berthold, Axel, 01127 Dresden (DE); Poser, Robert, 01099 Dresden (DE); Lenz, Oliver, 01069 Dresden (DE); Mews, Marco, 01561 Ebersbach (DE); Görner, Lars, 01159 Dresden (DE)
(74) Representative: Lippert Stachow Patentanwälte Rechtsanwälte Partnerschaft mbB

(57) **Abstract**

The invention discloses a method for driving and controlling a 3- or 4-pigment medium in an electrophoretic display system by an electronic circuitry designed for driving an only 2-pigment medium, whereas the electrophoretic display system comprises a transparent top electrode, a bottom electrode and the 3- or 4-pigment medium between the top- and bottom electrode, whereas the 3- or 4-pigment medium comprises multiple microcapsules, wherein each microcapsule of the multiple microcapsules comprises three or four different colored nanoparticle types which can be moved by applying an electrical field to them. The objective to provide a method that can drive not only 2, but in particular 3- and 4-pigment media with a simple and less complex electronic architecture previously designed for controlling 2-pigment media is solved thereby that the three or four different colored nanoparticle types of each microcapsule of the 3- or 4-pigment medium are charged with positive or negative polarity of different values, wherein the different nanoparticle types of each microcapsule are addressed by applying a sequence of varying voltage levels with varying polarity, wherein the varying voltage levels are provided by the 2-pigment medium driving electronic circuitry, wherein the top electrode of the 2-pigment medium driving electronic circuitry is configured as reference electrode and is additionally set to -15V and +15V.

## Description

The invention relates to a method for driving and controlling a 3- or 4-pigment medium in an electrophoretic display system by an electronic circuitry designed for driving an only 2-pigment medium, whereas the electrophoretic display system comprises a transparent top electrode, a bottom electrode and the 3- or 4-pigment medium between the top and bottom electrode, whereas the 3- or 4-pigment medium comprises multiple microcapsules, wherein each microcapsule of the multiple microcapsules comprises three or four different colored nanoparticle types which can be moved by applying an electrical field to them.

An electrophoretic display system, commonly known as an e-paper display, is a type of electronic paper technology used to create low-power, reflective displays that mimic the appearance of ink on paper. These displays are commonly found in e-readers, electronic shelf labels, and other applications where high contrast, wide viewing angles, and low power consumption are desired.

The core component of an electrophoretic display is microcapsules or microspheres. These microcapsules contain charged pigments or nanoparticles suspended in a clear fluid. The terms pigments or nanoparticles are used synonymously. The nanoparticles and the fluid are also called an electrophoretic medium. The nanoparticles have different charges, positively and negatively charged, and are typically black and white. There are also grayscale and even color e-paper displays. The display is constructed by sandwiching the microcapsule-containing fluid between two electrodes on a substrate. One of the electrodes, often the top- or front electrode is usually transparent, typically made of ITO (indium tin oxide).

A matrix of thin-film transistors (TFT) or other addressing circuitry is present on the substrate. This circuitry allows individual pixels/microcapsules to be selectively charged, controlling the movement of pigments.

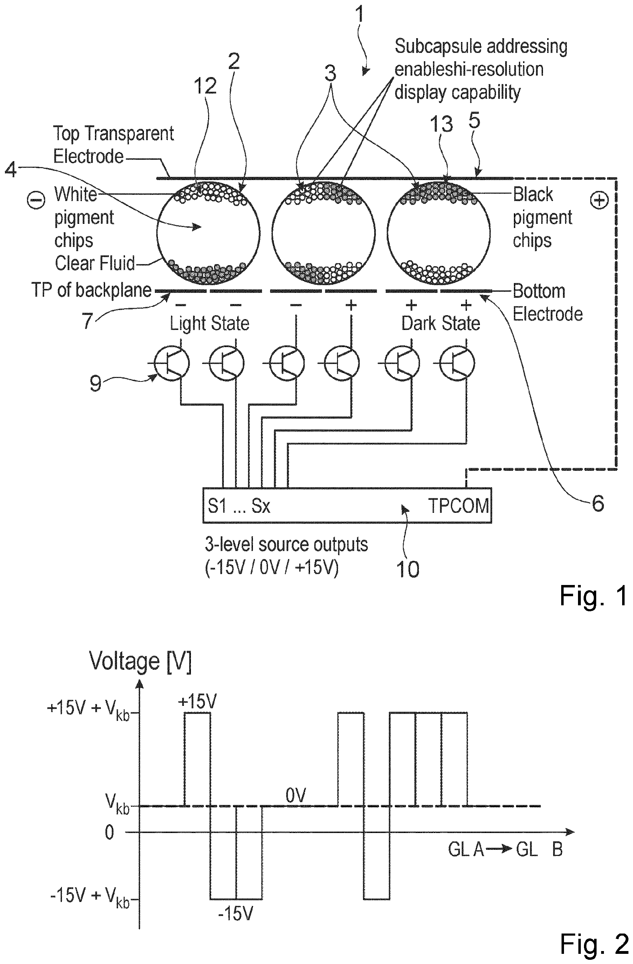

When a voltage is applied between the transparent top electrode and a backplane as a counterpart electrode, an electric field is generated across the microcapsules. Depending on the polarity of the applied voltage, the charged nanoparticles or pigments within the microcapsules migrate towards one of the electrodes. For instance, if a positive voltage is applied to the top pixel of the backplane, positively charged black pigments move upward, causing that area of the display to appear black. Conversely, if a negative voltage is applied to the top pixel of the backplane, negatively charged white pigments move upward, resulting in a white appearance (Fig. 1). To change the grey level of a pixel, several pulses driving the pixel to white (-15V) or black (+15V) are needed. In grayscale displays, the sequence of pulses applied to each pixel is varied in order to achieve different shades of gray. Color electrophoretic displays work similarly but use additional pigments or nanoparticles and much more complex addressing methods to achieve a wider color gamut.

The color electrophoretic display system uses a subtractive color scheme, which refers to the color mixing process that result from the absorption of light. It is based on the colors Cyan, Magenta, and Yellow (CMY). In this color scheme, colors are created by subtracting color components through absorption rather than adding light. The subtractive color mixing works as follows: Cyan absorbs red and reflects blue and green. Magenta absorbs green and reflects red and blue. Yellow absorbs blue and reflects red and green. When these colors are combined, each color absorbs certain wavelengths of light, resulting in less light being reflected and creating a mixed color. For instance, combining cyan and magenta will result in a dark shade of blue since cyan absorbs red light and magenta absorbs green light. The subtractive color scheme is commonly used in printers, painting, and other applications where colors are generated by mixing pigments. Therefore, in the present electrophoretic medium, the colored pigments cyan, magenta and yellow are filter particles/pigments and the white and black particles are opaque.

Electrophoretic displays are reflective displays, meaning they rely on external light sources for visibility, just like traditional paper. Ambient light, such as sunlight or indoor lighting, is used to illuminate the display. This makes electrophoretic displays highly readable in various lighting conditions, including bright sunlight.

One of the major advantages of electrophoretic displays is their extremely low power consumption. Power is only required when changing the content of the display, and once an image is set, no power is needed to maintain it. This property makes e-paper ideal for applications where battery life is crucial. Electrophoretic displays are bi-stable, meaning they can hold an image without continuous power. This is because the charged pigments remain in place until a voltage is applied to change their position. This bi-stable nature contributes to the low power consumption of these displays.

These displays are well-suited for applications requiring high contrast, wide viewing angles, and minimal power usage.

As mentioned above, an electrophoretic medium consists of colored, charged nanoparticles, which can be moved by applying an electrical field to them. Two-pigment systems consist of two nanoparticles types, e. g. black and white, which are charged with inverse polarity and can be driven by applying two voltage levels of the same value but different pre-signage to the electrodes.

As a result, todays electronics architectures for two-pigment media are based on a three-level voltage drive scheme: A positive source voltage (e. g. +15V/black), a negative source voltage (e. g. -15V/white) and zero volt (0V/no change) for pixels where the medium remains unchanged. If a positive source voltage of +15V is applied to the back-electrode the positively charged black nanoparticles move upwards to the transparent top electrode and the display appears black at this position. If a negative source voltage of -15V is applied to the back-electrode the negatively charged white nanoparticles move upwards to the transparent top electrode and the display appears white at this position. If a voltage difference between the back- and front-electrode is 0V the nanoparticles do not move and remain unchanged.

Three- and four level systems consist of three or four colored nanoparticle types, which are charged with positive or negative polarity of different values. These systems use so-called 3-or 4-pigment media. They are addressed by applying a sequence of varying voltage levels with varying polarity.

As a result, todays architectures to drive 3- or 4-pigment media require more complex electrical hardware circuitry, which increases costs and needs more space. Furthermore, a more complex software flow is needed to provide the varying voltage levels, compared to the above described two-pigment setup.

The objective of the present invention is therefore, to provide a method that can drive not only 2, but also in particular 3- and 4-pigment media in electrophoretic display systems with a simple and less complex electronic architecture previously designed for controlling 2-pigment media.

The objective of the present invention will be solved by a method according to independent claim 1. The method for driving and controlling a 3- or 4-pigment medium in an electrophoretic display system by an electronic circuitry, which was previously designed for driving an only 2-pigment medium, whereas the electrophoretic display system comprises a transparent top electrode, a bottom electrode and the 3- or 4-pigment medium between the top and bottom electrode, whereas the 3- or 4-pigment medium comprises multiple microcapsules, wherein each microcapsule of the multiple microcapsules comprises three or four different colored nanoparticle types which can be moved by applying an electrical field to them, said method comprises the following steps:
- the three or four different colored nanoparticle types of each microcapsule of the 3- or 4-pigment medium are charged with positive or negative polarity of different values, wherein
- the different nanoparticle types of each microcapsule are addressed by applying a sequence of varying voltage levels with varying polarity, wherein
- the varying voltage levels are provided by the 2-pigment medium driving electronic circuitry as driving force for the nanoparticles, wherein the top electrode of the 2-pigment medium driving electronic circuitry is configured as reference electrode and is additionally set to -15V and +15V.

In order to set the voltage range to -15V and +15V a controller-specific register setting of the 2-pigment medium driving electronic circuitry is used. Standard settings of a usually used driver chip for electrophoretic display systems with 2-pigment medium for the TPCOM interface allow only -4V to +10V. With the new setting, one can increase the voltage over the pigment media to +/-30V needed to address the differently charged nanoparticles of the same polarity. The new setting of the controller refers to the utilization of an internal kickback voltage. A kickback voltage, also known as back EMF (Electromotive Force), is a phenomenon that occurs in electrical circuits when the current flowing through an inductive load, such as a coil or an inductor, is suddenly interrupted or changed. It results from the inherent property of inductors to oppose changes in current. Usually, this kickback voltage is not wanted and compensated to minimize its negative effects. In the present invention, this kickback voltage is used at TPCOM explicitly to address and drive one type of nanoparticles in a 3- or 4-pigment medium or for driving null frames (source voltage set to 0V).

The implementation of this method is able to drive 3-and 4-pigment media with an electronics architecture designed for 2-pigment media. As a result, display content with three color (3-pigment media, "tricolor") or seven colors (4-pigment media) can be shown.

Using the same driver IC for 2-, 3- and 4-pigment based systems simplifies production and enables cost reduction thanks to scaling effects based on combining several products on one platform.

As a result, no hardware circuitry is needed for generating additional voltages for the additional nanoparticle types, which leads to an improved smaller footprint and lower cost.

In an embodiment of the present inventive method, the 2-pigment medium driving electronic circuitry comprises a controller and switching transistors of the pixels of the display system, the controller is configured to control an input voltage of source inputs of the switching transistors of each pixel of the display system, wherein the source input of the switching transistor of a pixel is set to -15V, 0V or +15V according to a desired color of said pixel. The varying different voltage levels provided by the 2-pigment medium driving electronic circuitry act as a driving force for the nanoparticles in the electrophoretic medium, so that different colors can be displayed.

In another embodiment of the present inventive method, a specified voltage level sequence is applied to the switching transistors of the pixels of the display system according to a previous gray-level of the pixels and a desired subsequent color of the pixels, respectively. By applying a color-dependent sequence of waveform sub-sets instead of one waveform-table derived from a hardware-Look-up-table alone, more than two different colored and charged nanoparticles can be moved. This bypasses the driving of up to four gray levels/colors, which is the default setting of the 2-pigment driver IC, to a larger number, but for the price of a longer update duration. This allows the driving of colored media where higher voltages over the media (TPCOM-top pixel voltage) are needed, but for the price of a longer update duration.

In a further embodiment of the inventive method, a kickback voltage is measured for every display system and programmed into the controller of the display system. This can be considered as a calibration step of every individual display system and which should use a 2-pigment medium driving electronic circuitry, although the display system comprises a 3- or 4-pigment medium.

The invention will be explained in more detail using an exemplary embodiment.

The appended drawings show
- Fig. 1: Setup for a 2-pigment medium (black and white) in an electrophoretic display system;
- Fig. 2: Specified voltage level sequence for switching between two gray levels for the setup in Fig. 1 according to the inventive method;
- Fig. 3: Setup for a 4-pigment medium (white, cyan, yellow, magenta) in the electrophoretic display system controlled by the inventive method;
- Fig. 4: Specified voltage level sequence for switching or updating the display of fig. 3 from one to another color.

Figure 1 shows a setup for a 2-pigment medium in an electrophoretic display system 1 with black and white nanoparticles 3. The setup comprises a top transparent electrode 5, a bottom electrode 6 which functions as a top pixel of the backplane 7, whereas each pixel of the display system 1 is controlled by a driver IC which controls thin film transistors to switch the applied voltage between the top- 5 and bottom electrode 6. According to the inventive method, the reference voltage of the TPCOM interface 10 is not set to ground (GND), instead it is set to the kickback voltage 8 of the display system 1. As a result, the 3-level source drivers of the backplane 7 can be switched between -15V, 0V and +15V. Although this requires many phases, resulting in a long refresh time and image flickering during an image update, the biggest advantage is that an only 2-pigment driver IC can be used instead of developing an IC, which can control more than 2-pigment media.

Figure 2 shows an exemplary voltage level sequence for switching a pixel from gray level A to gray level B having a constant TPCOM-set to the kickback voltage 8.

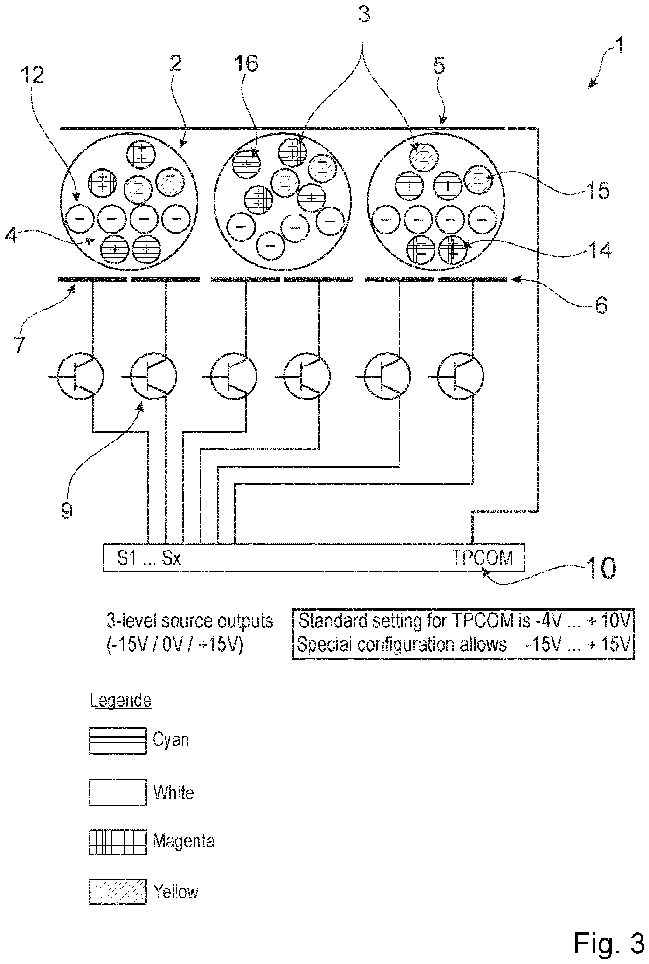

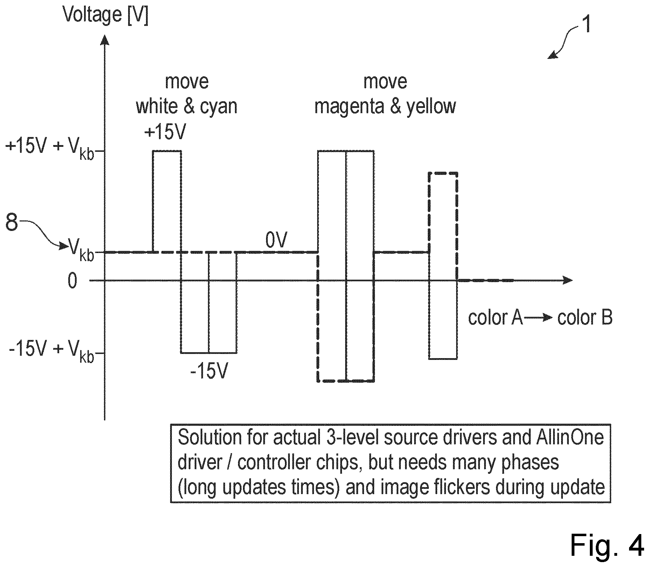

Figure 3 shows a setup for a 4-pigment medium in an electrophoretic display system 1 with white 12, cyan 16, magenta 14 and yellow 15 nanoparticles. The setup is the same as in figure 1, it comprises a top transparent electrode 5, a bottom electrode 6 which functions as a top pixel of the backplane 7, whereas each pixel of the display system 1 is controlled by a driver IC which controls thin film transistors 9 to switch the applied voltage between the top- 5 and bottom 6 electrode. According to the inventive method, the reference voltage of the TPCOM interface 10 is not permanently set to ground (GND). Due to the new controller setting, TPCOM can also be set to -15V and +15V so that a higher electrical field can be applied on the media using the source voltages of -15V and +15V. As a result, the 3-level source drivers of the backplane 7 can be switched between - 15V, 0V and +15V. The microcapsules in figure 3 actually show from left to the right side the colors red, black and green. According to the applied voltage between the top- 5 and bottom 6 electrode, which influences the strength of the electrical field *̅E̅*̅, the velocity of the differently charged nanoparticles 3 depends on the different mobilities µ of the nanoparticles *̅v̅*̅ = *µ · E̅.* If a voltage pulse of +15V is applied to the bottom electrode 6 the negatively charged white nanoparticles 12 move to the bottom electrode 6 and the positively charged cyan nanoparticles 16 move to the top electrode 5. If simultaneously a voltage pulse of +15V is applied to the bottom electrode 6 and the TPCOM interface 10 is set to -15V the negatively charged yellow nanoparticles 15 move to the bottom electrode 6 and the positively charged magenta nanoparticles 14 move to the top electrode 5 (see Fig. 4).

Although the color changes require many phases, resulting in a long refresh time and image flickering during an image update, the biggest advantage is that an only 2-pigment driver IC can be used instead of developing an IC for controlling more than 2-pigment media.

Figure 4 shows an exemplary voltage level sequence for switching a pixel from color A to color B having variable TPCOM-setting.

### List of Reference Signs

- 1: electrophoretic display system
- 2: microcapsule
- 3: pigments, nanoparticles
- 4: clear fluid
- 5: top electrode
- 6: bottom electrode
- 7: backplane
- 8: kickback voltage
- 9: switching transistors
- 10: reference electrode / TPCOM interface
- 11: voltage level sequence
- 12: white nanoparticles
- 13: black nanoparticles
- 14: magenta nanoparticles
- 15: yellow nanoparticles
- 16: cyan nanoparticles

## Claims

1. A method for driving and controlling a 3- or 4-pigment medium in an electrophoretic display system (1) by an electronic circuitry designed for driving an only 2-pigment medium, whereas the electrophoretic display system (1) comprises a transparent top electrode (5), a bottom electrode (6) and the 3- or 4-pigment medium between the top- (5) and bottom (6) electrode, whereas the 3- or 4-pigment medium comprises multiple microcapsules (2), wherein each microcapsule (2) of the multiple microcapsules (2) comprises three or four different colored nanoparticle types (3) which can be moved by applying an electrical field to them, the method comprises the following steps:
- the three or four different colored nanoparticle types (3) of each microcapsule (2) of the 3- or 4-pigment medium are charged with positive or negative polarity of different values, wherein
- the different nanoparticle types (3) of each microcapsule (2) are addressed by applying a sequence of varying voltage levels with varying polarity, wherein
- the varying voltage levels are provided by the 2-pigment medium driving electronic circuitry, wherein the top electrode (5) of the 2-pigment medium driving electronic circuitry is configured as reference electrode and is additionally set to -15V and +15V.

2. The method for driving and controlling a 3- or 4-pigment medium in an electrophoretic display system (1) according to claim 1, wherein the 2-pigment medium driving electronic circuitry comprises a controller and switching transistors of the pixels of the display system (1), the controller is configured to control an input voltage of source inputs of the switching transistors of each pixel of the display system (1), wherein the source input of the switching transistor of a pixel is set to -15V, 0V or +15V according to a desired color of said pixel.

3. The method for driving and controlling a 3- or 4-pigment medium in an electrophoretic display system (1) according to any of the former claims, wherein a specified voltage level sequence is applied to the switching transistors of the pixels of the display system (1) according to a previous gray-level of the pixels and a desired subsequent color of the pixels, respectively.

4. The method for driving and controlling a 3- or 4-pigment medium in an electrophoretic display system (1) according to any of the former claims, wherein a kickback voltage (8) is measured for every display system and programmed into the controller of the display system (1).
